# EUROPEAN PATENT SPECIFICATION

(11) **EP 4 224 621 B1**
(45) Date of publication and mention of the grant of the patent: **18.06.2025**
(21) Application number: 21900908.1
(22) Date of filing: 24.11.2021
(51) Int. Cl.: H01M 50/557, H01M 50/178, H01M 50/105, H01M 50/586, H01M 50/548, H01M 50/186, H01M 50/574, H01M 50/595, H01M 50/591

(54) **SECONDARY BATTERY AND DEVICE INCLUDING SAME**
SEKUNDÄRBATTERIE UND VORRICHTUNG DAMIT
BATTERIE SECONDAIRE ET DISPOSITIF LA COMPRENANT

(30) Priority: 01.12.2020 KR 20200165723
(43) Date of publication of application: 09.08.2023
(73) Proprietor: LG Energy Solution, Ltd., Seoul 07335 (KR)
(72) Inventor: KIM, Yeonkyoung, Daejeon 34122 (KR); CHOI, Hyoungsik, Daejeon 34122 (KR)
(74) Representative: Plasseraud IP
(86) International application number: PCT/KR2021/017337
(87) International publication number: WO 2022/119220

(56) References cited:
- JP-A- 2000 215 877
- JP-A- 2001 229 893
- JP-A- 2012 099 311
- JP-A- 2014 229 435
- JP-A- H0 574 473
- KR-A- 20150 000 547
- US-A1- 2016 118 640

## Description

### [TECHNICAL FIELD]

### Cross Citation with Related Application(s)

This application claims the benefit of Korean Patent Application No. 10-2020-0165723 filed on December 1, 2020 with the Korean Intellectual Property Office.

The present disclosure relates to a secondary battery and a device including same, and more particularly, to a secondary battery that prevents disconnection of an electrode tab, and a device including same

### [BACKGROUND]

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, along with the technology development and increased demand for mobile devices, demand for batteries as energy sources has been increasing rapidly, and accordingly, much research on batteries which can meet the various needs has been carried out.

Typically, the demand for the lithium secondary battery, such as a lithium ion battery or a lithium ion polymer battery, which have advantages such as a high energy density, a discharge voltage, an output stability, and the like is high.

Further, the secondary battery may be classified based on the structure of an electrode assembly having a structure in which a cathode and an anode are stacked with a separator being interposed therebetween. Typically, there may mentioned, for example, a jelly-roll type electrode assembly having a structure in which long sheets of cathodes and anodes are wound in the state in which a separator is interposed therebetween, a stacked-type electrode assembly having a structure in which pluralities of cathodes and anodes, cut by a certain size unit, are sequentially stacked in the state in which separators are interposed therebetween, or the like. In recent years, in order to solve problems caused by the jelly-roll type electrode assembly and the stacked-type electrode assembly, there has been developed a stacked/folded type electrode assembly, which is a combination of the jelly-roll type electrode assembly and the stacked-type electrode assembly, having a structure in which unit cells stacked with predetermined units of the cathodes and the anodes are sequentially wound with a separator being interposed therebetween in the state of having been placed on a separation film.

Further, based on the shape of a battery case, the secondary battery may be classified into a cylindrical battery where an electrode assembly is mounted in a cylindrical case, a prismatic battery where an electrode assembly is mounted in a prismatic can, and a pouch type battery where an electrode assembly is mounted in a pouch type case of an aluminum laminate sheet.

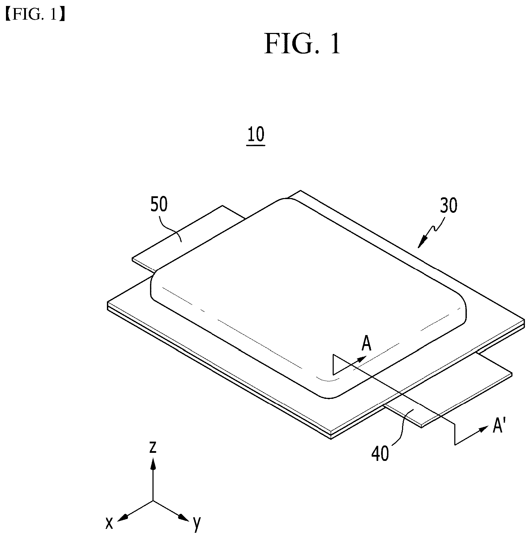

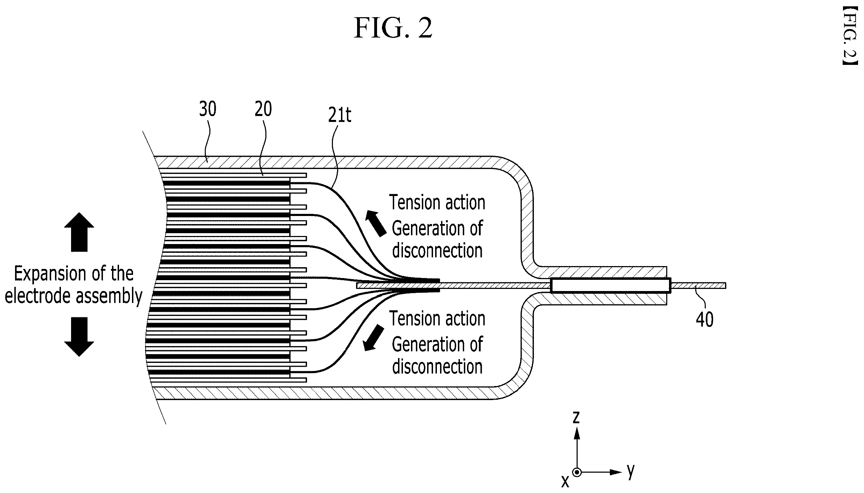

Fig. 1 is a perspective view of a conventional pouch type secondary battery, and Fig. 2 is a cross-sectional view taken along the cutting line A-A' of Fig. 1.

Referring to Figs. 1 and 2, a conventional pouch type battery cell 10 can be manufactured by housing an electrode assembly 20 inside a pouch case 300 and then sealing the case. The electrode assembly 20 may include electrodes, and a separator disposed between the electrodes. The electrodes include an electrode tab 21t, and the electrode tab 21t may be joined to the electrode lead 40 by a method such as welding. As the electrode lead 40 is exposed to the outside of the pouch type battery case 30, an electrical connection of the electrode assembly 20 may be made.

In this case, the electrode assembly 20 may be a stacked-type electrode assembly in which a plurality of electrodes cut in units of a predetermined size are sequentially stacked with a separator being interposed therebetween. All the electrode tabs 21t extending from the respective electrodes may be joined to the electrode lead 40.

The electrode assembly 20 repeats contraction and expansion as charge and discharge are repeated. As shown in Fig. 2, the electrode assembly 20 causes expansion in its thickness direction (direction parallel to the z-axis). Since the electrode lead 40 included in the conventional secondary battery 10 is not flexible and is interposed between the sealed battery cases 30, there is no choice but to fix the position in a state in which the electrode tabs 21t are joined. At this time, when the electrode assembly 20 expands in its thickness direction (direction parallel to the z-axis), the electrode lead 40 is fixed and thus, a large tension is generated on the electrode tab 21t. In particular, in the stacked-type electrode assembly, the electrode tab 21t located on the outermost side exerts the largest tension at expansion of the electrode assembly 20, and thus, in the worst case, it may lead to disconnection.

Therefore, there is a need to develop a technique that can prevent disconnection of the electrode tab when expansion of the electrode assembly occurs.

JP2000215877A discloses a flat battery. US2016118640A1 discloses a power storage unit and electronic device.

### [DETAILED DESCRIPTION OF THE INVENTION]

### [Technical Problem]

It is an object of the present disclosure to provide a secondary battery that can reduce tension applied to the electrode tab even if expansion of the electrode assembly occurs, and prevent disconnection of the electrode tab located on the outermost side.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a secondary battery comprising: an electrode assembly including electrode sheets on which electrode tabs are formed and a separator located between the electrode sheets; a battery case in which the electrode assembly is housed; and an electrode lead connected to the electrode tab and protruding to the outside of the battery case, wherein the electrode lead includes a flexible part having stretchability in a direction parallel to the protruding direction of the electrode lead, and wherein the flexible part is located inside the battery case.

The flexible part may have a bent shape.

The flexible part can stretch in a direction parallel to the protruding direction of the electrode lead.

The flexible part may include at least one of gold (Au) and silver (Ag).

The battery case may include an upper case and a lower case, the sealing part of the upper case and the sealing part of the lower case may be heat-sealed to each other, and the flexible part may be located between a portion of the electrode lead where the sealing parts are located and the electrode assembly.

The electrode lead includes a first part connected to the flexible part and the electrode tab; a second part connected to the flexible part and protruding to the outside of the battery case; and a fixing part connected to each of the first part and the second part.

The flexible part may include a first flexible part and a second flexible part, and the fixing part may be located between the first flexible part and the second flexible part.

The fixing part may include at least one of a glass material, a ceramic material, carbon graphite, and an alloy material having low flexibility.

The fixing part may have a straight line shape.

The electrode assembly may be a stacked-type electrode assembly in which the electrode sheets are stacked, and when the electrode sheets expand in the thickness direction, the flexible part can stretch in a direction perpendicular to the thickness direction.

### [Advantageous Effects]

According to the embodiments of the present disclosure, the flexible part is formed on the electrode lead, whereby it is possible to reduce the tension applied to the electrode tab even if expansion of the electrode assembly occurs. Thereby, it is possible to prevent disconnection of the electrode tab located on the outermost side.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional pouch type secondary battery;
Fig. 2 is a cross-sectional view taken along the cutting line A-A' of Fig. 1;
Fig. 3 is an exploded perspective view of a secondary battery according to an embodiment of the present disclosure;
Fig. 4 is a perspective view which shows a state in which the secondary battery of Fig. 3 is assembled;
Fig. 5 is a cross-sectional view taken along the cutting line B-B' of Fig. 4;
Fig. 6 is a plan view of the electrode lead included in the secondary battery of Fig. 5 as viewed in the -z-axis direction on the xy plane;
Fig. 7 is a cross-sectional view which shows a state in which the electrode assembly is expanded with respect to the electrode assembly and the electrode lead included in the secondary battery of Fig. 5;
Fig. 8 is a cross-sectional view which shows an electrode assembly and an electrode lead according to an embodiment of the present invention.
Fig. 9 is a plan view of the electrode assembly and the electrode lead of Fig. 8 as viewed in the -z-axis direction on the xy plane; and
Fig. 10 is a plan view which shows an electrode lead according to another modified embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

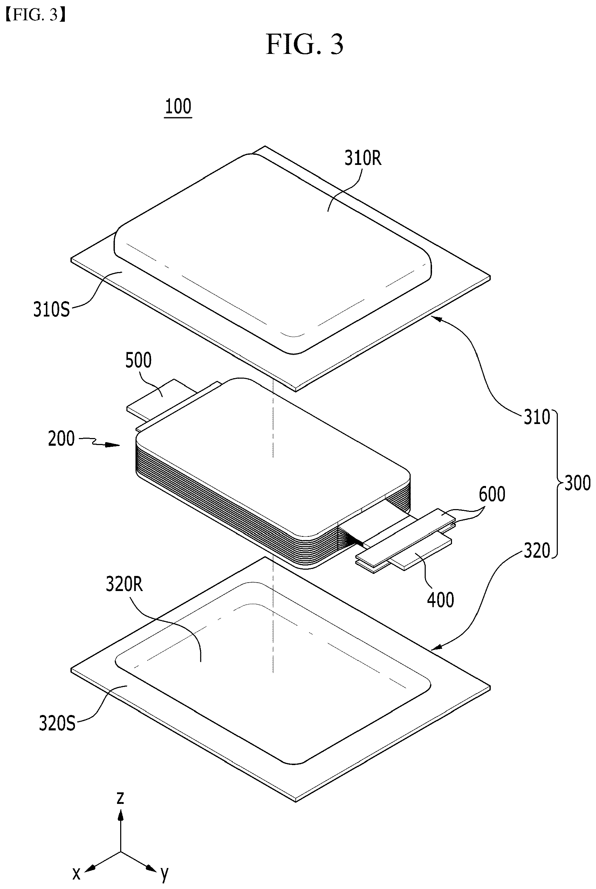

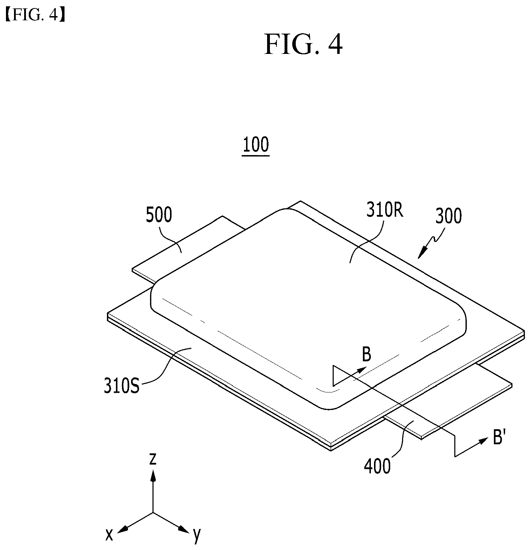

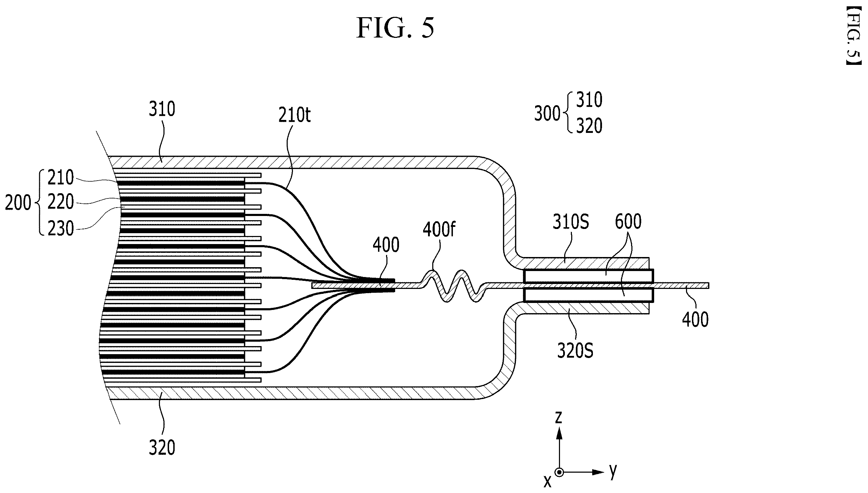

Fig. 3 is an exploded perspective view of a secondary battery according to an embodiment of the present disclosure. Fig. 4 is a perspective view which shows a state in which the secondary battery of Fig. 3 is assembled. Fig. 5 is a cross-sectional view taken along the cutting line B-B' of Fig. 4.

Referring to Figs. 3 to 5, the secondary battery 100 according to an embodiment of the present disclosure includes an electrode assembly 200, a battery case 300 in which the electrode assembly 200 is housed, and electrode leads 400 and 500 protruding to the outside of the battery case 300.

The electrode assembly 200 includes electrode sheets 210 and 220 on which electrode tabs 210t are formed and a separator 230 located between the electrode sheets 210 and 220. In particular, the electrode assembly 200 according to the present embodiment may be a stacked-type electrode assembly, a jelly-roll type electrode assembly, or a stacked/folded type electrode assembly, but is preferably a stacked-type electrode assembly. Specifically, the stacked-type electrode assembly may have a structure in which a plurality of electrode sheets 210 and 220 are stacked with a separator 230 being interposed therebetween.

Each of the electrode sheets 210 and 220 may be formed by applying an electrode active material onto an electrode current collector, and a part of the electrode current collector may protrude to provide an electrode tab 210t. The electrode sheets 210 and 220 may be divided into a cathode sheet and an anode sheet, and a separator 230 may be interposed between the cathode sheet and the anode sheet. As an example, the electrode sheet 210 may be a cathode sheet, and the electrode tab 210t protruding therefrom may be a cathode tab. The other electrode sheet 220 may be an anode sheet, and an electrode tab (not shown) protruding therefrom may be an anode tab.

Further, the electrode tab according to the present embodiment may be connected to the electrode lead. As an example, electrode tabs 210t having any one polarity may be joined to any one electrode lead 400, and electrode tabs (not shown) having the other polarity may be joined to the other electrode leads 500. These electrode leads 400 and 500 may protrude from both end parts of the battery case 300. Figs. 3 and 4 show that two electrode leads 400 and 500 protrude in mutually opposite directions, but the protruding direction is not particularly limited. That is, a structure in which the two electrode leads 400 and 500 protrude in the same direction from one side of the secondary battery 100 is also possible. One of the two electrode leads 400 and 500 may be a cathode lead, and the other may be an anode lead.

Meanwhile, the battery case 300 according to the present embodiment may be a pouch type case. The battery case 300 may include an upper case 310 and a lower case 320 that are heat-sealed to each other. Although not specifically shown in the figure, the battery case 300 including the upper case 310 and the lower case 320 may be a laminated sheet including a resin layer and a metal layer. Specifically, each of the upper case 310 and the lower case 320 may include an inner resin layer for sealing, a metal layer for preventing penetration of material and an outer resin layer on the outermost side.

The outer resin layer has excellent tensile strength and weather resistance compared to its thickness, and may have electrical insulation, in order to protect the pouch type secondary battery 100 from the outside. The outer resin layer may include a polyethylene terephthalate (PET) resin or a nylon resin. The metal layer can prevent air, moisture, and the like from flowing into the pouch type secondary battery 100. The metal layer may include aluminum (Al). The inner resin layer may be heat-sealed to each other by heat and pressure applied in a state in which the electrode assembly 200 is mounted. The inner resin layer may include casted polypropylene (CPP) or polypropylene (PP).

Recessed storage parts 310R and 320R in which the electrode assembly 200 can be seated may be formed in each of the upper case 310 and the lower case 320, and the electrode assembly 200 may be stored in the storage parts 310R and 320R. The method of forming the storage parts 310R and 320R are not particularly limited, and a deep drawing process using a pressing punch can be applied.

Sealing parts 310S and 320S may be provided along the outer periphery of each of the storage parts 310R and 320R of the upper case 310 and the lower case 320. The sealing part 310S of the upper case 310 and the sealing part 320S of the lower case 320 may be heat-sealed to each other to seal a battery case 300. More specifically, the inner resin layer of the sealing part 310S of the upper case 310 and the inner resin layer of the sealing part 320S of the lower case 320 may be heat-sealed in a state of facing each other. Meanwhile, Fig. 3 illustrates an upper case 310 and a lower case 320 in which a storage part is formed and which are separated from each other, but it may be a laminated sheet in which one side of the upper case and one side of the lower case are integrally formed, and may be a plate-shaped structure in which the storage part is formed in only one of the upper case and the lower case, and the storage part is not formed in the other.

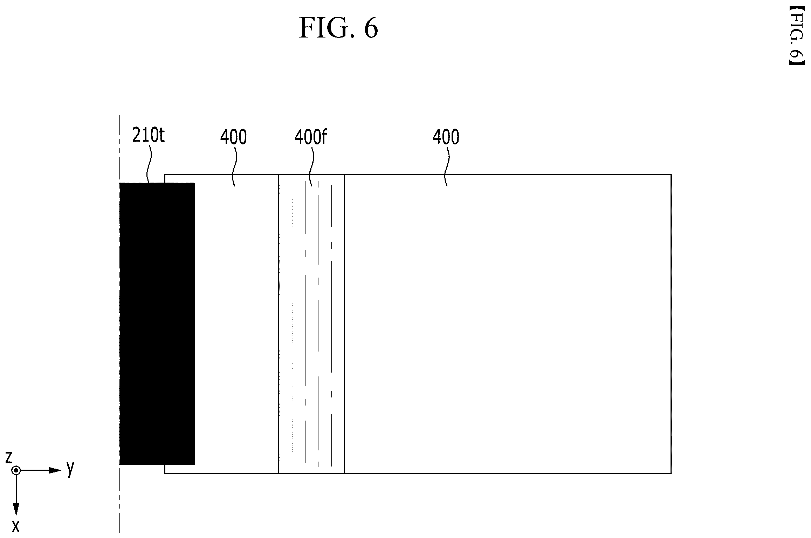

Next, a flexible part formed on an electrode lead according to an embodiment of the present disclosure will be described in detail with reference to Figs. 5 and 6 and the like. In order to avoid repetition of the description, any one of the two electrode leads 400 and 500 will be mainly described, but it goes without saying that the structure of the flexible part according to the present embodiment can be formed in other electrode leads 500 as well.

Fig. 6 is a plan view of the electrode lead included in the secondary battery of Fig. 5 as viewed in the -z-axis direction on the xy plane.

Referring to Figs. 3, 5 and 6, the electrode lead 400 according to the present embodiment has a flexible part 400f having stretchability in a direction parallel to the protruding direction (direction parallel to the y-axis) of the electrode lead 400, and the flexible part 400f is located inside the battery case 300.

Specifically, the flexible part 400f according to the present embodiment has a bent shape and may stretch in a direction parallel to the protruding direction (direction parallel to the y-axis) of the electrode lead 400. In other words, the flexible part 400f according to the present embodiment may be in a form compressed in a direction parallel to the protruding direction (parallel to the y-axis) of the electrode lead 400.

The flexible part 400f is preferably made of a material having excellent ductility, malleability, elasticity, and toughness, and may include, for example, at least one of gold (Au) and silver (Ag). Such a flexible part 400f may be formed in the middle of the electrode lead 400. Specifically, as shown in Figs. 5 and 6, the existing plate-shaped metal material constituting the electrode lead 400 can be joined to both ends of the metal material constituting the flexible part 400f by a method such as welding. That is, for example, the electrode lead 400 including the flexible part 400f can be manufactured by welding a metal member containing aluminum (Al) or copper (Cu) to both ends of the metal member containing silver (Ag).

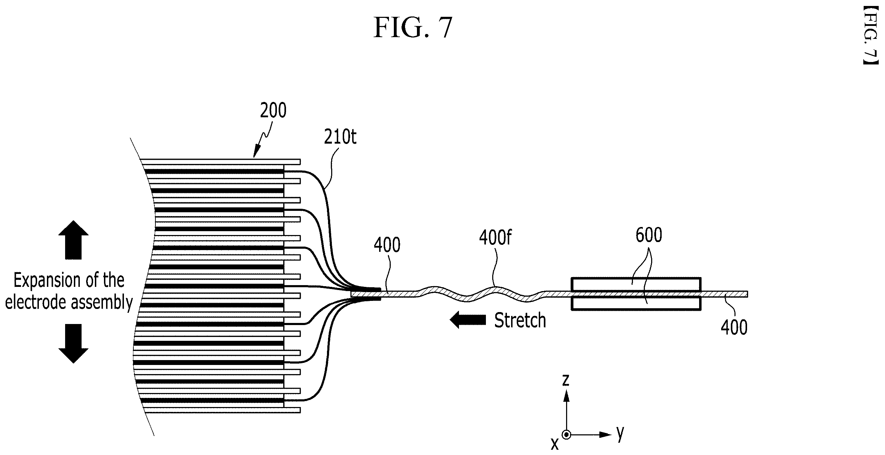

Fig. 7 is a cross-sectional view which shows a state in which the electrode assembly is expanded with respect to the electrode assembly and the electrode lead included in the secondary battery of Fig. 5.

In the conventional electrode assembly 20 (see Fig. 2), since the electrode lead 40 is not flexible and its position is fixed, a large tension is generated in the electrode tab 21t along with expansion of the electrode assembly 20, and the electrode tab 21t located on the outermost side has a risk of disconnection. On the other hand, referring to Fig. 7 together with Figs. 5 and 6, since the flexible part 400f of the electrode lead 400 according to the present embodiment has stretchability, it may stretch in a direction perpendicular to the thickness direction when the electrode assembly 200 expands in the thickness direction (direction parallel to the z-axis). In other words, along with the expansion of the electrode assembly 200, the flexible part 400f according to the present embodiment can be stretched in a direction parallel to the protruding direction (parallel to the y-axis) of the electrode lead 400, in particular, in the direction in which the electrode assembly 200 is located (-y-axis direction).

By stretching the flexible portion 400f, it is possible to prevent excessive tension from being generated in the electrode tab 210t, and it is possible to prevent disconnection of the electrode tab 210t located at the outermost side.

At this time, as described above, the flexible part 400f included in the electrode lead 400 is located inside the battery case 300. Specifically, referring back to Fig. 5, the sealing part 310S of the upper case 310 and the sealing part 320S of the lower case 320 are heat-sealed to each other, and the flexible part 400f may be located between a portion where the sealing parts 310S and 320S in the electrode lead 400 are located and the electrode assembly 200. If the flexible part 400f is formed in the outer part which is the outside of the portion where the sealing parts 310S and 320S in the electrode lead 400 are located, the tension applied to the electrode tab 210t cannot be reduced at expansion of the electrode assembly 200 because of being the outside of the portion fixed by the sealing parts 310S and 320S. Therefore, it is preferable that the flexible part 400f according to the present embodiment is formed inside the battery case 300.

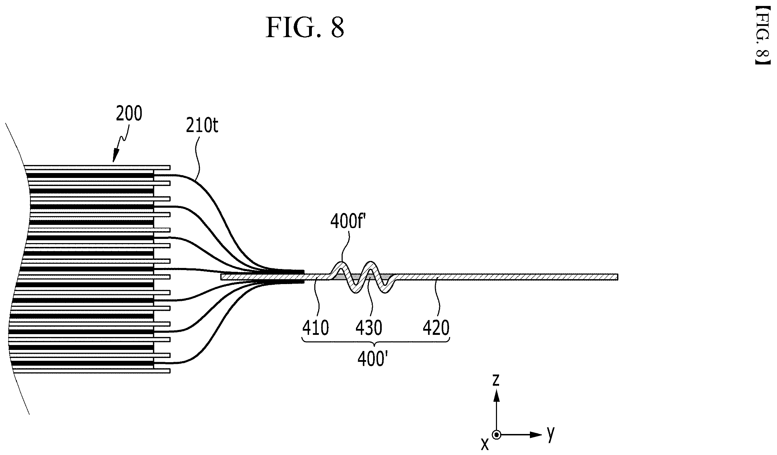

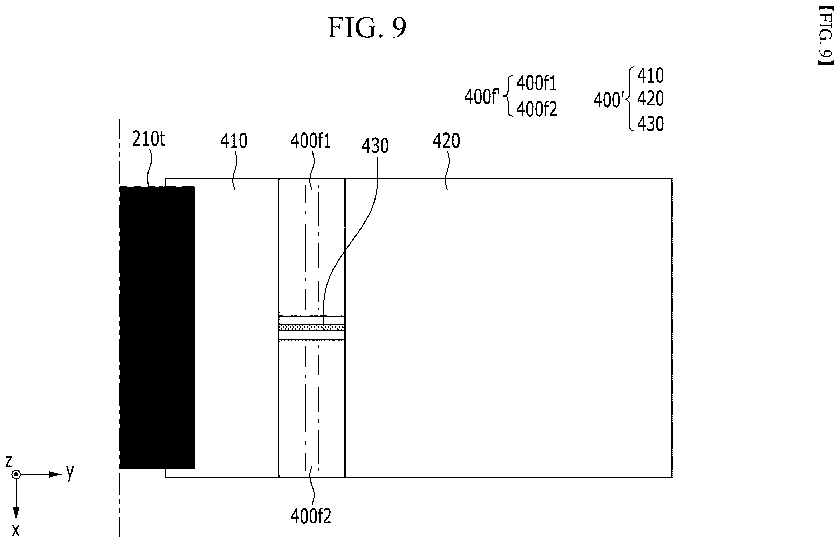

Next, a fixing part according to an embodiment of the present invention will be described in detail with reference to Figs. 8 and 9.

Fig. 8 is a cross-sectional view which shows an electrode assembly and an electrode lead according to an embodiment of the present invention. Fig. 9 is a plan view of the electrode assembly and the electrode lead of Fig. 8 as viewed in the -z-axis direction on the xy plane. In particular, Fig. 8 corresponds to a cross section taken along the yz plane, similar to the cross section of Fig. 5 or Fig. 7.

Referring to Figs. 8 and 9, the formation of the flexible part 400f' on the electrode lead 400' according to the embodiment of the present invention is similar to the contents described above, but the fixing part 430 can be further formed.

Specifically, the electrode lead 400' according to the present embodiment includes a first part 410 connected to the flexible part 400f' and the electrode tab 210t, a second part 420 connected to the flexible part 400f' and protruding to the outside of the battery case, and a fixing part 430 connected to each of the first part 410 and the second part 420.

More specifically, the flexible part 400f ' according to the present embodiment may include a first flexible part 400f1 and a second flexible part 400f2. A first part 410 may be joined to one end of each of the first flexible part 400f1 and the second flexible part 400f2, and a second part 420 may be joined to the other end of each of the first flexible part 400f1 and the second flexible part 400f2. As the joining method, weld-joining can be used as described above.

In this case, the fixing part 430 may be connected to each of the first part 410 and the second part 420 while being located between the first flexible part 400f1 and the second flexible part 400f2. Wherein, the fixing part 430 may also be connected to each of the first part 410 and the second part 420 by a method such as welding.

Any material that can be easily cut or broken can be applied to the fixing part 430 without particular limitation. In one example, the fixing part 430 may include at least one of a glass material, a ceramic material, carbon graphite, and an alloy material having low flexibility. Further, unlike the flexible part 400f' having a serpentine shape, the fixed part 430 may have a straight line shape.

Since the flexible part 400f contains a material having excellent ductility, malleability, elasticity, and toughness, the flexible part 400f' is not fixed in the process of welding the electrode tab 210t to the electrode lead 400', so that welding cannot proceed smoothly. Therefore, in the present embodiment, the fixed part 430 of a straight line shape is provided to fix the compressed form of the flexible part 400f'. Further, since the fixing part 430 can keep the distance between the first part 410 and the second part 420 constant, it is possible to prevent the flexible part 400f ' from being stretched even before the electrode assembly 200 is expanded. Instead, since the fixing part 430 according to the present embodiment includes a metal material with slightly weak strength, it does not hinder the stretching of the flexible part 400f' while being cut along with the expansion of the electrode assembly 200.

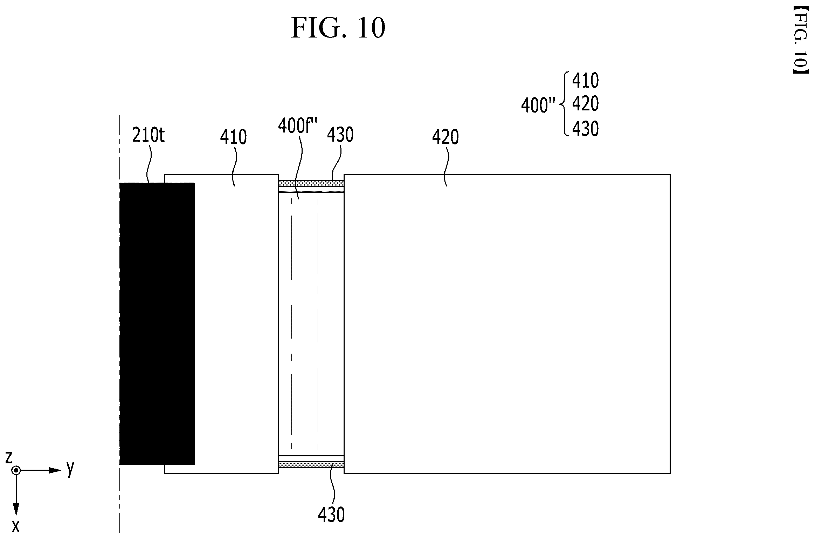

Meanwhile, Fig. 10 is a plan view which shows an electrode lead according to another modified embodiment of the present disclosure, which specifically shows the position of the deformed fixing part 430. The electrode lead 400" according to the present embodiment includes a first part 410, a second part 420, and a fixing part 430. The fixing unit 430 according to the present embodiment is not particularly limited to its position and number as long as it connects the first part 410 and the second part 420. As an example, referring to Fig. 10, one flexible part 400f" that is connected to the first part 410 and the second part 420 is formed, and the two fixing parts 430 may be connected to each of the first part 410 and the second part 420 with one flexible part 400f" being interposed therebetween. That is, the two fixing parts 430 may be arranged on both sides of the flexible part 400f" in the x-axis direction. The fixing part 430 shown in Fig. 10 can also fix the compressed form of the flexible part 400f", and the spacing between the first part 410 and the second part 420 can be kept constant prior to expansion of the electrode assembly.

Meanwhile, referring back to Figs. 3 and 5, a lead film 600 may be located on each of the electrode leads 400 and 500. The lead film 600 may be located between the upper case 310 and the lower case 320 in the form of wrapping the electrode leads 400 and 500, respectively.

The lead film 600 may not only prevent a short circuit from occurring between the electrode leads 400 and 500 and the metal layer of the battery case 300, but also improve the sealing properties of the pouch type battery case 300. The electrode leads 400 and 500 made of a metal material have a slightly large contact resistance when heat-sealing to the inner resin layer of the pouch type battery case 300, which may cause a reduction in the surface adhesion. However, if the lead film 600 is provided as in the present embodiment, such an adhesion reduction phenomenon can be prevented. Further, the lead film 600 includes an insulating material and thus can block the application of current from the electrode leads 400 and 500 to the pouch type battery case 300.

The lead film 600 may be formed of a film having insulating properties and heat sealing properties. The lead film 600 may include, for example, at least one of polyimide (PI), polypropylene (PP), polyethylene (PE), and polyethylene terephthalate (PET).

Although the terms representing directions such as front, rear, left, right, upper and lower directions are used herein, these merely represent for convenience of explanation, and may differ depending on a position of an observer, a position of an object, or the like.

The above-mentioned secondary batteries according to the present embodiments can gathered in plural numbers to form a battery module. Such battery modules may be mounted together with various control and protection systems such as BMS(battery management system), and a cooling system to form a battery pack.

The secondary battery, the batter module and the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

200: electrode assembly
300: battery case
400, 500: electrode lead
400f: flexible part

## Claims

1. A secondary battery (100) comprising:
an electrode assembly (200) including electrode sheets (210, 220) on which electrode tabs (210t) are formed and a separator (230) located between the electrode sheets;
a battery case (300) in which the electrode assembly is housed; and
an electrode lead (400, 400', 400", 500) connected to the electrode tab and protruding to the outside of the battery case,
wherein the electrode lead includes a flexible part (400f, 400f', 400f") having stretchability in a direction parallel to the protruding direction of the electrode lead, and
wherein the flexible part is located inside the battery case,
**characterized in that** the electrode lead comprises a first part (410) connected to the flexible part and the electrode tab; a second part (420) connected to the flexible part and protruding to the outside of the battery case; and a fixing part (430) connected to each of the first part and the second part.

2. The secondary battery of claim 1, wherein:
the flexible part has a bent shape.

3. The secondary battery of claim 1, wherein:
the flexible part can stretch in a direction parallel to the protruding direction of the electrode lead.

4. The secondary battery of claim 1, wherein:
the flexible part comprises at least one of gold (Au) and silver (Ag).

5. The secondary battery of claim 1, wherein:
the battery case comprises an upper case (310) and a lower case (320),
a sealing part (310S) of the upper case and a sealing part (320S) of the lower case are heat-sealed to each other, and
the flexible part is located between a portion of the electrode lead where the sealing parts are located and the electrode assembly.

6. The secondary battery of claim 1, wherein:
the flexible part comprises a first flexible part (400f1) and a second flexible part (400f2), and
the fixing part is located between the first flexible part and the second flexible part.

7. The secondary battery of claim 1, wherein:
the fixing part comprises at least one of a glass material, a ceramic material, carbon graphite, and an alloy material having low flexibility.

8. The secondary battery of claim 1, wherein:
the fixing part has a straight line shape.

9. The secondary battery of claim 1, wherein:
the electrode assembly is a stacked-type electrode assembly in which the electrode sheets are stacked, and
when the electrode sheets expand in the thickness direction, the flexible part stretches in a direction perpendicular to the thickness direction.

10. A device comprising the secondary battery as set forth in claim 1.

## Patentansprüche

1. Sekundärbatterie (100), umfassend:
eine Elektrodenanordnung (200), welche Elektrodenbleche (210, 220), an welchen Elektrodenanzapfungen (210t) ausgebildet sind, und einen Separator (230) umfasst, welcher sich zwischen den Elektrodenblechen befindet;
ein Batteriegehäuse (300), in welchem die Elektrodenanordnung aufgenommen ist; und
eine Elektrodenleitung (400, 400', 400", 500), welche mit der Elektrodenanzapfung verbunden ist und zu der Außenseite des Batteriegehäuses vorsteht,
wobei die Elektrodenleitung einen flexiblen Teil (400f, 400f', 400f") umfasst, welcher eine Dehnbarkeit in eine Richtung aufweist, welche parallel zu der Vorstandsrichtung der Elektrodenleitung ist, und
wobei sich der flexible Teil in dem Batteriegehäuse befindet,
**dadurch gekennzeichnet, dass** die Elektrodenleitung umfasst:
einen ersten Teil (410), welcher mit dem flexiblen Teil und der Elektrodenanzapfung verbunden ist; einen zweiten Teil (420), welcher mit dem flexiblen Teil verbunden ist und zu der Außenseite des Batteriegehäuses vorsteht; und einen Befestigungsteil (430), welcher mit jedem aus dem ersten Teil und dem zweiten Teil verbunden ist.

2. Sekundärbatterie nach Anspruch 1, wobei:
der flexible Teil eine gebogene Form aufweist.

3. Sekundärbatterie nach Anspruch 1, wobei:
der flexible Teil sich in eine Richtung dehnen kann, welche parallel zu der Vorstandsrichtung der Elektrodenleitung ist.

4. Sekundärbatterie nach Anspruch 1, wobei:
der flexible Teil wenigstens eines aus Gold (Au) und Silber (Ag) umfasst.

5. Sekundärbatterie nach Anspruch 1, wobei:
das Batteriegehäuse ein oberes Gehäuse (310) und ein unteres Gehäuse (320) umfasst,
ein Dichtungsteil (310S) des oberen Gehäuses und ein Dichtungsteil (320S) des unteren Gehäuses miteinander verschweißt sind, und der flexible Teil sich zwischen einem Abschnitt der Elektrodenleitung, an welchem sich die Dichtungsteile befinden, und der Elektrodenanordnung befindet.

6. Sekundärbatterie nach Anspruch 1, wobei:
der flexible Teil einen ersten flexiblen Teil (400f1) und einen zweiten flexiblen Teil (400f2) umfasst, und
sich der Befestigungsteil zwischen dem ersten flexiblen Teil und dem zweiten flexiblen Teil befindet.

7. Sekundärbatterie nach Anspruch 1, wobei:
der Befestigungsteil wenigstens eines aus einem Glasmaterial, einem Keramikmaterial, Kohlenstoff-Graphit und einem Legierungsmaterial, welches eine geringe Flexibilität aufweist, umfasst.

8. Sekundärbatterie nach Anspruch 1, wobei:
der Befestigungsteil eine geradlinige Form aufweist.

9. Sekundärbatterie nach Anspruch 1, wobei:
die Elektrodenanordnung eine Elektrodenanordnung eines gestapelten Typs ist, in welcher die Elektrodenbleche gestapelt sind, und
wenn sich die Elektrodenbleche in der Richtung der Dicke ausdehnen, sich der flexible Teil in einer Richtung dehnt, welche senkrecht zu der Richtung der Dicke ist.

10. Vorrichtung, welche die Sekundärbatterie, wie in Anspruch 1 dargelegt, umfasst.

## Revendications

1. Batterie secondaire (100) comprenant :
un ensemble d'électrodes (200) comportant des feuilles d'électrode (210, 220) sur lesquelles des pattes d'électrode (210t) sont formées et un séparateur (230) situé entre les feuilles d'électrode ;
un boîtier de batterie (300) dans lequel l'ensemble d'électrodes est logé ; et
un fil d'électrode (400, 400', 400", 500) connecté à la patte d'électrode et faisant saillie vers l'extérieur du boîtier de batterie,
dans laquelle le fil d'électrode comporte une partie souple (400f, 400f', 400f") présentant une extensibilité dans une direction parallèle à la direction de saillie du fil d'électrode, et
dans laquelle la partie souple est située à l'intérieur du boîtier de batterie,
**caractérisée en ce que** le fil d'électrode comprend une première partie (410) connectée à la partie souple et à la patte d'électrode ; une deuxième partie (420) connectée à la partie souple et faisant saillie vers l'extérieur du boîtier de batterie ; et une partie de fixation (430) connectée à chacune de la première partie et de la deuxième partie.

2. Batterie secondaire selon la revendication 1, dans laquelle :
la partie souple présente une forme courbée.

3. Batterie secondaire selon la revendication 1, dans laquelle :
la partie souple peut s'étirer dans une direction parallèle à la direction de saillie du fil d'électrode.

4. Batterie secondaire selon la revendication 1, dans laquelle :
la partie souple comprend au moins un parmi l'or (Au) et l'argent (Ag).

5. Batterie secondaire selon la revendication 1, dans laquelle :
le boîtier de batterie comprend un boîtier supérieur (310) et un boîtier inférieur (320), une partie d'étanchéité (310S) du boîtier supérieur et une partie d'étanchéité (320S) du boîtier inférieur sont thermoscellées l'une à l'autre, et
la partie souple est située entre une partie du fil d'électrode où les parties d'étanchéité sont situées et l'ensemble d'électrodes.

6. Batterie secondaire selon la revendication 1, dans laquelle :
la partie souple comprend une première partie souple (400fl) et une deuxième partie souple (400f2), et
la partie de fixation est située entre la première partie souple et la deuxième partie souple.

7. Batterie secondaire selon la revendication 1, dans laquelle :
la partie de fixation comprend au moins un parmi un matériau en verre, un matériau en céramique, du graphite de carbone et un matériau en alliage présentant une faible souplesse.

8. Batterie secondaire selon la revendication 1, dans laquelle :
la partie de fixation présente une forme rectiligne.

9. Batterie secondaire selon la revendication 1, dans laquelle :
l'ensemble d'électrodes est un ensemble d'électrodes de type empilé dans lequel les feuilles d'électrode sont empilées, et
lorsque les feuilles d'électrode se dilatent dans la direction d'épaisseur, la partie souple s'étire dans une direction perpendiculaire à la direction d'épaisseur.

10. Dispositif comprenant la batterie secondaire selon la revendication 1.
